(19) Europäisches Patentamt
European Patent Office
Office européen des brevets

(11) **EP 4 050 376 B1**

(12) **FASCICULE DE BREVET EUROPEEN**

(45) Date de publication et mention de la délivrance du brevet:
**06.03.2024 Bulletin 2024/10**

(21) Numéro de dépôt: **22156161.6**

(22) Date de dépôt: **10.02.2022**

(51) Classification Internationale des Brevets (IPC):
**G01S 13/935** (2020.01)    **G01S 13/42** (2006.01)
**G01S 13/34** (2006.01)    G01S 13/02 (2006.01)

(52) Classification Coopérative des Brevets (CPC):
**G01S 13/935; G01S 13/34; G01S 13/42;**
G01S 2013/0245; Y02A 90/10

(54) **SYSTEME RADAR D'IMAGERIE DE PROXIMITE A ANTENNE MULTIVOIES**

RADARSYSTEM ZUR NAHBEREICHSBILDGEBUNG MIT MEHRWEGANTENNE

RADAR PROXIMITY IMAGING SYSTEM WITH MULTI-CHANNEL ANTENNA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.02.2021 FR 2101811**

(43) Date de publication de la demande:
**31.08.2022 Bulletin 2022/35**

(73) Titulaire: **THALES**
**92190 Meudon (FR)**

(72) Inventeurs:
- **VEYRAC, Yoan**
  **33701 MERIGNAC CEDEX (FR)**
- **COTTRON, Rodolphe**
  **33701 MERIGNAC CEDEX (FR)**
- **KEMKEMIAN, Stéphane**
  **33701 MERIGNAC CEDEX (FR)**

(74) Mandataire: **Atout PI Laplace**
**Immeuble "Visium"**
**22, avenue Aristide Briand**
**94117 Arcueil Cedex (FR)**

(56) Documents cités:
**EP-A1- 3 611 538**    **EP-A1- 3 671 270**
**WO-A1-2018/115372**

- **FEIL PETER ET AL: "Multi function radar system for improved situational awareness in helicopters", 2013 EUROPEAN RADAR CONFERENCE, EMA, 9 octobre 2013 (2013-10-09), pages 153-155, XP032533679,**

EP 4 050 376 B1

## Description

L'invention concerne le domaine des systèmes radar, notamment les systèmes radar destinés à être embarqués dans un porteur mobile, par exemple un aéronef à voilure tournante tel qu'un hélicoptère.

L'invention concerne plus précisément les systèmes radar de proximité et d'anticollision permettant d'assurer une sécurité de navigation à bord d'un aéronef à voilure tournante.

Dans le domaine de la sécurité de navigation d'hélicoptères, un problème général concerne les accidents liés à des collisions en phases de décollage, d'atterrissage ou lors de déplacements à proximité d'obstacles comme des falaises ou des immeubles. Le risque de collision est d'autant plus important lorsque les conditions environnementales sont dégradées et que la visibilité du pilote est réduite (brouillard, nuage de poussière, nuit).

Dans ce domaine, il existe un besoin d'équipement radar permettant de fournir à l'équipage une vision de proximité panoramique, quelles que soient les conditions de visibilité optique, afin d'être alerté suffisamment tôt d'un danger de collision.

Cet équipement doit être compatible avec les contraintes exigeantes relatives à son installation sur un hélicoptère, ce qui inclut des considérations de masse, de consommation, d'encombrement, de positionnement et de coût.

En outre, la fonction réalisée par l'équipement radar doit disposer d'un angle de couverture très important avec un temps de rafraichissement suffisamment court pour permettre d'anticiper au mieux les dangers de collision possibles, en particulier lors des manoeuvres à proximité directe d'obstacles.

Par ailleurs, certaines flottes d'hélicoptères peuvent déjà être équipées de radar de surveillance, et peuvent difficilement embarquer une charge utile radar supplémentaire. De même, certains hélicoptères sont équipés de radar météorologique, avec des contraintes similaires sur les capacités d'emport.

Un problème général à résoudre consiste ainsi à concevoir un système radar de proximité qui peut être basé sur une architecture de radar de surveillance ou de radar météorologique afin de réutiliser une partie de ces équipements existants et limiter l'encombrement à bord du porteur.

Différentes solutions de l'état de l'art ont été envisagées pour répondre au problème de détection d'obstacles de proximité pour des porteurs mobiles.

Une première solution connue repose sur l'utilisation de systèmes de radionavigation par satellites, par exemple des systèmes GPS, pour localiser le porteur, associé à une carte numérique de terrain qui localise les obstacles potentiels. Cette solution présente l'avantage de n'utiliser qu'un récepteur GPS, généralement disponible par ailleurs. Néanmoins, les inconvénients majeurs de cette solution sont la résolution trop grossière et le temps de rafraichissement trop élevé du système GPS. Cela peut cependant être amélioré par des données provenant de la centrale de navigation. Un autre désavantage réside dans la faible robustesse du système GPS, qui peut être brouillé ou indisponible dans certaines zones. Par ailleurs, ce système repose sur des modèles de terrain qui ne sont pas nécessairement à jour, ou qui peuvent manquer de précision. En particulier, les véhicules ou les installations temporaires n'y sont pas référencées, ce qui pose un problème de fiabilité du système à l'encontre de ces obstacles non répertoriés.

Une deuxième solution connue consiste à mettre en oeuvre des capteurs laser pour réaliser une cartographie optique des abords de l'hélicoptère. Cette solution présente l'inconvénient de ne pas fonctionner par conditions de visibilité réduite (par exemple brouillard), ou bien dans la direction du soleil.

Une autre grande famille de solutions est à base de capteurs radars, qui permettent d'obtenir une cartographie même lorsque la visibilité optique est faible.

Les systèmes basés sur des radars à balayage mécanique ne permettent pas de respecter le compromis temps de rafraîchissement court sur un domaine de balayage étendu.

Dans les solutions à base de radars statiques, on distingue les installations mettant en oeuvre des radars à balayage électronique, et des solutions reposant sur l'utilisation d'un grand nombre de senseurs statiques.

Les radars à balayage électronique réalisent une cartographie en balayant l'espace périphérique de l'hélicoptère. L'application d'anticollision visée nécessite une couverture angulaire très importante. La figure de balayage réalisée présente donc un temps de rafraichissement long, ou bien un temps d'illumination court dans chaque direction de l'espace. Ce compromis n'est pas favorable pour l'application qui nécessite à la fois un temps de rafraichissement court, et un temps d'illumination le plus long possible pour bénéficier d'une mesure précise de la vitesse Doppler. En effet, la mesure de la vitesse Doppler permet d'obtenir une meilleure cartographie de l'environnement et de mieux identifier et anticiper les dangers potentiels. Le document EP3671270A1 divulgue un système radar de proximité pour aéronef à voilure tournante comprenant au moins un senseur radar et comportant un panneau antennaire formé d'un nombre entier N de secteurs réception et au moins un secteur émission, chaque secteur comprenant plusieurs éléments rayonnants.

La deuxième solution, basée sur la mise en place d'un nombre important de capteurs statiques permet d'obtenir une couverture permanente de l'espace. Néanmoins, l'obtention d'une résolution angulaire fine implique l'utilisation d'un grand nombre de capteurs. La pluralité des capteurs impacte le prix et la facilité d'installation sur le porteur. Une alternative consiste à utiliser des antennes à formation de faisceaux par le calcul. Ces antennes possèdent plusieurs voies de réception distinctes. Il est alors possible d'émettre et de recevoir dans une grande portion de l'espace. La numérisation de chacune des voies de réception individuelle permet de former des faisceaux simultanément, *a posteriori,* par traitement numérique. Le compromis entre la taille du domaine de couverture et la résolution angulaire du système se traduit par le nombre de voies distinctes à numériser et à traiter, ce qui impacte la complexité et le coût de la solution au premier chef.

Une variante de cette solution consiste à utiliser plusieurs voies d'émission codées de manière orthogonale et plusieurs voies de réception numérisées indépendamment (technique connue sous le nom de MIMO, pour Multiple Input, Multiple Output). Il est alors possible d'extraire les signaux provenant de chaque émetteur au niveau de chaque récepteur, de façon à reconstituer un nombre de voies virtuelles correspondant au produit du nombre de voies d'émission par le nombre de voies de réception. La complexité de ces systèmes et le débit des données à transmettre et à traiter croit avec le nombre de voies de réception.

L'invention propose un système de radar de proximité pour hélicoptère, ou plus généralement pour aéronef à voilure tournante, basé sur une antenne à balayage électronique 2D multivoies en émission et/ou en réception, dont les antennes élémentaires peuvent être modulées en phase.

Avantageusement, ce système radar peut être le même qui réalise des fonctions de surveillance et/ou la fonction radar météorologique, dont les architectures actuelles mettent largement en oeuvre des radars à antenne active constitués de modules actifs individuellement couplés à des antennes élémentaires.

Le principe de l'invention repose sur la modulation en phase d'une ou plusieurs antennes élémentaires en émission, et la modulation en phase d'une ou plusieurs antennes élémentaires en réception, au sein de chaque voie de réception numérisée.

Un avantage de l'invention est qu'elle permet d'adapter le nombre d'éléments rayonnants actifs en fonction de la vitesse de déplacement du porteur.

L'invention a pour objet un système radar d'imagerie comprenant un système antennaire comportant une pluralité de secteurs composés chacun d'une pluralité d'éléments rayonnants activables, le système radar comprenant au moins une voie d'émission et au moins une voie de réception apte à commander chacun un secteur, chaque voie d'émission étant configurée pour commander un secteur au moyen d'une rafale de signaux ayant une fréquence de récurrence prédéterminée et dont la phase à l'origine à chaque récurrence suit une loi de codage en phase prédéfinie, chaque voie de réception étant configurée pour appliquer ladite loi de codage en phase aux éléments rayonnants actifs d'un secteur, les lois de codage en phase appliquées aux différents éléments rayonnants actifs d'un ensemble composé d'un secteur commandé par une voie d'émission et d'un secteur commandé par une voie de réception, étant orthogonales entre elles, le système comprenant en outre un calculateur comprenant un module d'identification de voies virtuelles configuré pour filtrer en réception chaque voie virtuelle correspondant à la combinaison d'un élément rayonnant d'un secteur commandé par une voie d'émission et d'un élément rayonnant d'un secteur commandé par une voie de réception.

Selon un aspect particulier de l'invention, chaque loi de codage en phase est définie par une fréquence Doppler différente pour chaque élément rayonnant, chaque voie virtuelle étant définie par une fréquence Doppler égale à la somme de la fréquence Doppler associée à un élément rayonnant en émission et de la fréquence Doppler associée à un élément rayonnant en réception, les valeurs des fréquences Doppler des éléments rayonnants étant choisies de manière à ce que l'ensemble des fréquences Doppler des voies virtuelles soient équiréparties dans une bande de fréquence [-Fr/2 ; Fr/2] avec Fr la fréquence de récurrence.

Selon un aspect particulier de l'invention, le système radar est destiné à être embarqué sur un porteur mobile ayant une vitesse de déplacement donnée et le calculateur comprend en outre un module d'activation des éléments rayonnants et un module d'estimation d'encombrement spectral configurés pour déterminer un nombre d'éléments rayonnants actifs par secteur maximal respectant une contrainte d'encombrement spectral des voies virtuelles fonction de la vitesse de déplacement du porteur et de la fréquence de récurrence des signaux de sorte à éviter un repliement de spectre.

Selon un aspect particulier de l'invention, le nombre d'éléments rayonnants actifs M par secteur commandé par une voie d'émission et le nombre d'éléments rayonnants actifs N par secteur commandé par une voie de réception respectent la contrainte suivante : $M.N < (\lambda Fr/2Vp)$ où $\lambda$ est la longueur d'onde des signaux, Fr est la fréquence de récurrence et Vp est la vitesse de déplacement du porteur.

Selon un aspect particulier de l'invention, la loi de codage en phase des éléments rayonnants suit une modulation de type « Doppler Division Multiple Access » DDMA.

Selon un aspect particulier de l'invention, chaque voie de réception comprend un sommateur pour sommer les signaux reçus par les éléments rayonnants actifs d'un même secteur.

Selon un aspect particulier de l'invention, chaque voie d'émission comporte un modulateur configuré pour moduler les signaux radar en fréquence sur chaque récurrence.

Selon un aspect particulier de l'invention, chaque voie d'émission comporte un générateur d'impulsions radar configuré pour générer une rafale d'impulsions radar à la fréquence de récurrence prédéterminée.

Selon un aspect particulier de l'invention, chaque élément rayonnant actif est composé d'une pluralité de sous-éléments rayonnants actifs, chaque voie d'émission et chaque voie de réception étant configurée pour appliquer une commande de dépointage prédéfinie aux sous-éléments rayonnants actifs d'un même élément rayonnant actif.

Selon un aspect particulier de l'invention, le calculateur est configuré pour réaliser, pour chaque voie de réception, un traitement de filtrage distance sur les signaux à chaque récurrence et un traitement de filtrage Doppler de récurrence à récurrence.

D'autres caractéristiques et avantages de la présente invention apparaîtront mieux à la lecture de la description qui suit en relation aux dessins annexés suivants.

[Fig. 1] représente un schéma fonctionnel d'un système radar selon un premier mode de réalisation de l'invention,

[Fig. 2] représente un exemple de forme d'onde utilisée par le système radar de la figure 1,

[Fig. 3] représente un diagramme d'identification de voies virtuelles d'émission-réception dans l'espace Doppler, selon un aspect particulier de l'invention,

[Fig. 4] représente un diagramme illustrant l'encombrement spectral des voies virtuelles identifiées à la figure 3 en fonction de la vitesse de déplacement du porteur,

[Fig. 5] représente un schéma fonctionnel d'un système radar selon un deuxième mode de réalisation de l'invention.

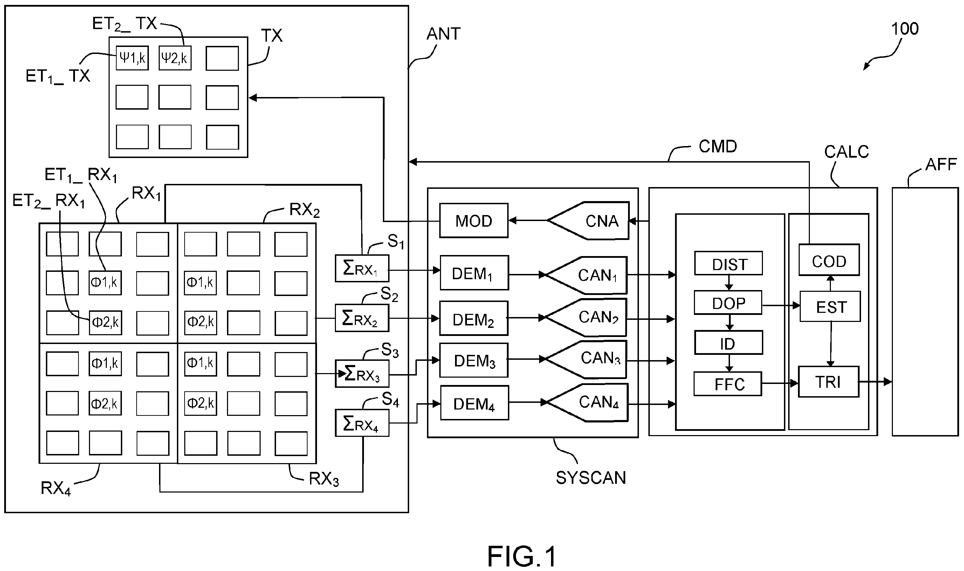

La figure 1 représente un schéma d'un système radar 100 selon un premier mode de réalisation de l'invention.

La figure 1 présente une architecture d'un exemple de système radar multivoies comprenant une voie d'émission et quatre voies de réception. Sans sortir du cadre de l'invention, le nombre de voies d'émission peut être supérieur à une voie et le nombre de voies de réception peut être un nombre quelconque strictement supérieur à 1.

Le système radar 100 comprend un système antennaire ANT, un système de conversion analogique numérique SYSCAN, un calculateur numérique CAL et un dispositif d'affichage AFF.

Sur l'exemple de la figure 1, le système antennaire ANT est composé de plusieurs secteurs comportant chacun le même nombre d'éléments antennaires. Pour cet exemple particulier, le système antennaire ANT comprend un secteur en émission TX et quatre secteurs en réception RX1,RX2,RX3,RX4. Chaque secteur comporte un nombre identique d'éléments rayonnants (9 éléments sur l'exemple de la figure 1). Chaque élément rayonnant est activable ou désactivable individuellement. L'invention permet un fonctionnement avec un nombre réduit d'éléments rayonnants activés par secteur. Sur l'exemple de la figure 1, deux éléments rayonnants ET1-TX,ET2-TX sont activés en émission et deux éléments rayonnants ET1-RX1,ET2-RX1 sont activés pour chaque secteur de réception.

Chaque élément rayonnant est modulé en phase de manière indépendante au moyen d'une commande d'activation CMD générée par un codeur COD.

Le secteur d'émission TX est commandé par une voie d'émission et les quatre secteurs de réception RX1,RX2,RX3,RX4 sont commandés chacun par une voie de réception dédiée.

Le système antennaire ANT comporte en outre un sommateur S1,S2,S3,S4 pour chaque secteur de réception. Un sommateur est configuré pour sommer les signaux reçus par les éléments antennaires actifs d'un même secteur de réception RX.

La voie d'émission comporte un générateur de signaux radars numériques (faisant partie du calculateur CALC mais non représenté), un convertisseur numérique analogique CNA et un modulateur sur porteuse MOD.

Dans un mode de réalisation particulier de l'invention, les signaux radars sont générés sous forme d'une rafale de signaux ayant une fréquence de récurrence prédéterminée Fr. A chaque récurrence, le signal est modulé par une rampe de fréquence. La forme d'onde utilisée pour moduler la rafale de signaux est, par exemple, de type modulation continue en fréquence ou FMCW (Frequency Modulated Continuous Wave). Un avantage à l'utilisation de ce type de forme d'onde est qu'elle permet d'obtenir une couverture à courte distance sans zone aveugle. Sans sortir du cadre de l'invention, d'autres formes d'ondes peuvent être envisagées comme cela sera explicité par la suite.

Les phases des éléments rayonnants actifs du secteur d'émissionTX sont codées avec une loi de codage orthogonale. Autrement dit, les différents éléments rayonnants actifs d'un même secteur de réception ont des phases à l'origine différentes et suivent une loi d'évolution orthogonale par rapport aux phases des autres éléments rayonnants actifs du même secteur.

Par exemple, la loi de codage de phase suit une modulation de type DDMA (Doppler Division Multiple Access), c'est-à-dire une évolution linéaire de la phase à l'origine avec un coefficient directeur différent pour chaque élément rayonnant d'un même secteur d'émission. La référence [1] décrit le principe d'une modulation DDMA. L'évolution de ces phases $\phi$1,k et $\phi$2,k correspondent à des fréquences Doppler notées Fd_tx1 et Fd_tx2 par la suite.

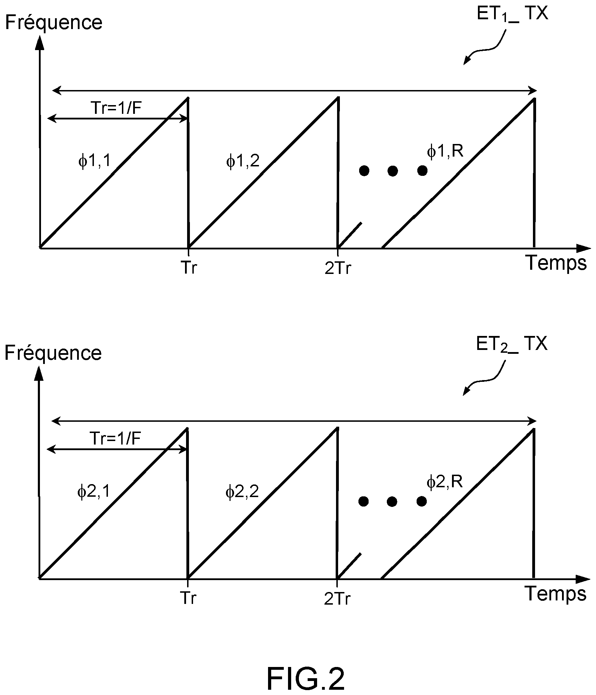

La figure 2 représente, sur deux diagrammes temps-fréquence, l'évolution de la fréquence du signal radar au cours du temps pour le premier élément antennaire actif $ET_1$_TX (figure du haut) et pour le second élément antennaire actif $ET_2$_TX (figure du bas).

A chaque récurrence (période de temps de durée Tr égale à l'inverse de la fréquence de récurrence Fr), la fréquence évolue linéairement (du fait de la modulation en fréquence FMCW) selon une rampe de fréquence. La phase à l'origine à chaque récurrence est différente et évolue selon une loi de codage orthogonale.

Ainsi, on note $\phi$1,k avec k variant de 1 à N les phases à l'origine de l'élément rayonnant actif $ET_1\_TX$ pour chaque récurrence d'indice k et $\phi$2,k avec k variant de 1 à N les phases à l'origine de l'élément rayonnant actif $ET_2\_TX$ pour chaque récurrence d'indice k.

Sans sortir du cadre de l'invention, les signaux modulés en fréquence peuvent être remplacés par des signaux impulsionnels à fréquence constante ou modulés en fréquence via une technique de compression d'impulsions.

La durée d'une impulsion peut être égale à la durée d'une récurrence Tr ou à une proportion de cette durée (par exemple 10% ou 20%). Dans ce dernier cas, on utilise un pourcentage de la durée de la récurrence pour émettre des signaux radars et le restant de la récurrence pour recevoir les échos de ces signaux. Dans ce cas, les mêmes éléments antennaires peuvent être utilisés en émission et en réception (puisque l'émission et la réception des signaux ne sont pas réalisées simultanément).

En réception, les signaux radar sont reçus sur les éléments rayonnants actifs de chaque secteur de réception. Les phases de ces éléments rayonnants sont codées via la même loi de codage que pour le secteur en émission.

Autrement dit, les lois de codage des éléments rayonnants des secteurs en réception sont orthogonales entre elles et à celles des éléments rayonnants des secteurs en émission. On note Fd_rx1 et Fd_rx2 les fréquences Doppler associées aux lois de codage des phases des éléments antennaires ET1_RX1 et ET2_RX1 d'un secteur en réception RX1.

Les signaux reçus sur un même secteur de réception RX1 sont sommés analogiquement au moyen du sommateur S1 après leur codage en phase individuel.

Pour chaque secteur de réception, le signal de sortie du sommateur est démodulé en fréquence via un démodulateur $DEM_1$ puis converti numériquement via un convertisseur analogique numérique $CAN_1$.

Dans le cas d'une modulation par rampe de fréquence, chaque démodulateur $DEM_1, DEM_2, DEM_3, DEM_4$ met en oeuvre une technique de démodulation connue sous le nom de « deramping ». Cette étape de démodulation en fréquence peut être réalisée soit en analogique au sein du système de conversion SYSCAN soit en numérique dans le calculateur CALC.

Le système radar selon l'invention comporte un calculateur CALC qui est configuré pour réaliser des traitements numériques de signaux radars.

Pour chaque voie de réception, un traitement de filtrage distance DIST est réalisé sur les signaux à chaque récurrence puis un traitement Doppler DOP est réalisé le long de la rafale, de récurrence à récurrence. Ces traitements sont, par exemple décrits dans la référence [2].

Un traitement d'identification de voies virtuelles ID est ensuite appliqué afin de séparer les différentes voies virtuelles correspondants aux différents éléments rayonnants en émission combinés avec les différents éléments rayonnants en réception.

Dans l'exemple de la figure 2, on obtient quatre voies virtuelles par secteur de réception qui correspondent à quatre fréquences Doppler différentes en sortie du traitement Doppler DOP.

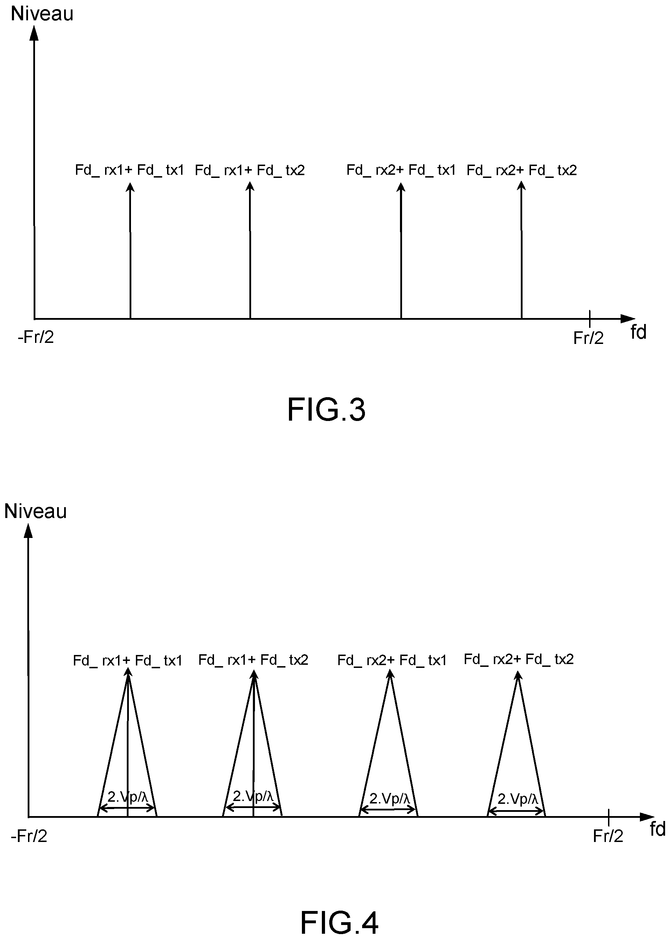

La figure 3 représente, sur un diagramme fréquentiel, les quatre fréquences Doppler Fd_rx1+Fd_tx1, Fd_rx1+Fd_tx2, Fd_rx2+Fd_tx1, Fd_rx2+Fd_tx2 correspondant aux quatre combinaisons possibles obtenues à partir des deux éléments antennaires actifs en émission et des deux éléments antennaires actifs en réception. De façon générale, le nombre de voies virtuelles pour un secteur de réception est égal au nombre d'éléments antennaires actifs en émission multiplié par le nombre d'éléments antennaires actifs en réception.

Les quatre fréquences Doppler obtenues en sortie du traitement Doppler correspondent aux différentes combinaisons des fréquences Doppler de modulation de la loi de codage en phase des deux éléments rayonnants actifs en émission et des deux éléments rayonnants actifs en réception.

Avantageusement, les fréquences Doppler de modulation sont choisies de sorte à pouvoir distinguer les différentes combinaisons dans l'espace Doppler. Par exemple, elles sont choisies de sorte que les différentes combinaisons de fréquence sont équiréparties dans la bande de fréquences [-Fr/2 ; Fr/2] .

Après identification des voies virtuelles, un traitement de formation de faisceaux par le calcul FFC est appliqué à l'ensemble des voies de réception en combinant les différentes voies virtuelles identifiées avec des déphasages choisis de sorte à réaliser un filtrage spatial dans des directions choisies.

Un module TRI de traitement de l'information et mise en forme des données est ensuite appliqué aux faisceaux formés numériquement afin de recomposer une cartographie de l'environnement du porteur avec des informations angulaires et de distance. Ces informations sont ensuite fournies à un afficheur AFF.

Par ailleurs, le traitement Doppler DOP réalisé permet en outre d'estimer la vitesse de déplacement du porteur dans son environnement, et ainsi de détecter et alerter sur un risque de collision avec des obstacles éventuels.

Les différents traitements réalisés par les modules DIST, DOP, FFC, TRI ne sont pas décrits en détails car ils correspondent à des traitements bien connus du domaine des radars de proximité. L'Homme du métier pourra se référer notamment au document [2] pour réaliser ces traitements.

La description précédente a été réalisée en prenant comme hypothèse que le porteur du radar est immobile, ce qui n'est généralement pas le cas en contexte opérationnel.

Lorsque la vitesse du porteur est non nulle, les fréquences illustrées à la figure 3 et obtenues en sortie du traitement Doppler ne sont pas des porteuses pures correspondant aux fréquences Doppler associées aux lois de codage DDMA. En effet, ces fréquences portent également les informations de fréquence Doppler liées au déplacement du porteur dans son environnement.

On considère par la suite que l'environnement du porteur est fixe et que le porteur est en mouvement à une vitesse Vp. Dans ce cas, en fonction des angles couverts par le panneau radar, les vitesses Doppler observées autour de chaque raie spectrale (illustrée à la figure 3) peuvent s'étendre au maximum de -Vp à +Vp, soit une largeur de $2Vp/\lambda$ en fréquence Doppler, avec $\lambda$ la longueur d'onde de la fréquence porteuse.

La figure 4 illustre ce phénomène et représente l'allure du spectre des signaux en sortie de traitement Doppler DOP.

Pour pouvoir correctement identifier les différentes voies virtuelles, il faut que leurs spectres soient séparés dans l'espace Doppler, autrement dit, qu'il n'y ait pas de repliement des fréquences les unes sur les autres. Cette condition est respectée si ces spectres sont séparés de $2Vp/\lambda$ au minimum.

La fréquence de récurrence Fr est choisie de manière à obtenir un domaine distance non ambigu Da compatible avec la situation de proximité, typiquement quelques centaines de mètres ou quelques kilomètres.

Le domaine vitesse non ambigu Va disponible est alors donné par la longueur d'onde utilisée, selon la formule :

$$Va= \lambda.c/(4.Da)$$

Cela correspond à une fréquence Doppler $Fa=2.Va/\lambda$.

Autrement dit, la fréquence de récurrence Fr est choisie égale à la fréquence $Fa=2.Va/\lambda$, de sorte à respecter le domaine distance non ambigu choisi, c'est-à-dire la distance maximale à laquelle on souhaite détecter des obstacles.

Si l'on réalise une répartition uniforme des voies virtuelles dans le spectre Doppler, leur espacement correspond à la fréquence de récurrence Fr divisée par le nombre de voies virtuelles, que l'on notera M.N (M le nombre de voies codées en phase à l'émission et N le nombre de voies codées en phase dans chaque secteur de réception).

Afin d'éviter un chevauchement des spectres, le nombre de voies virtuelles doit donc respecter la condition suivante :

$$Fr /(M.N) > 2Vp/\lambda.$$

Ainsi, on en déduit que le nombre d'éléments rayonnants actifs doit respecter la condition suivante: M. N <(Fr. $\lambda$)/ 2Vp.

La fréquence de récurrence Fr et la longueur d'onde $\lambda$ des signaux étant des paramètres fixés en fonction de l'application visée, on en déduit que le nombre d'éléments rayonnants actifs est limité par la vitesse de déplacement du porteur. Plus la vitesse Vp est importante, plus le nombre d'éléments rayonnants actifs doit être choisi faible. Autrement dit, le nombre de voies virtuelles exploitables sans repliement est inversement proportionnel à la vitesse du porteur.

L'encombrement en fréquence Doppler illustré à la figure 4 est un pire cas correspondant à une couverture angulaire très large qui générerait des échos dans des directions correspondant à la direction de déplacement du porteur, dans le sens de déplacement (échos en rapprochement à Vp), dans le sens opposé (échos en éloignement, à -Vp), ainsi que dans des directions intermédiaires. En fonction des cas d'usage (altitude du porteur, couverture angulaire), l'encombrement effectif sera une fraction de cet encombrement spectral.

L'étalement ou encombrement Doppler de l'environnement lié à la vitesse du porteur peut être estimé par analyse de la sortie du traitement Doppler via le module EST (figure 1).

En fonction du résultat de cette estimation, on peut en déduire le nombre maximal de voies virtuelles codées possible sans avoir de repliement spectral. Ainsi, en fonction de cette estimation, on en déduit le nombre d'éléments rayonnants actifs par secteur. Ce nombre est déterminé par le module EST ou le module de codage COD et la commande d'activation des éléments rayonnants (et de leur phase) CMD est ensuite générée en fonction de ce résultat.

Autrement dit, l'architecture radar décrite en figure 1 met en jeu un module d'estimation de l'encombrement Doppler EST, qui permet ensuite d'ajuster le nombre de voies virtuelles utilisées en modifiant le nombre d'antennes élémentaires par secteur en émission et en réception via la commande CMD. Le module de codage COD permet également de calculer les lois de phase associées à ces antennes élémentaires et d'envoyer les commandes CMD de déphasage nécessaires à chaque antenne élémentaire.

Ainsi, lorsque le porteur est à vitesse élevée et avec un encombrement important du spectre Doppler, un nombre restreint de voies virtuelles obtenues par codage de phase des antennes élémentaires d'émission et de réception sera exploité. Cela résulte en une résolution angulaire assez grossière, ce qui n'est pas particulièrement gênant pour des obstacles potentiels à distance élevée.

Ainsi, l'invention présente l'avantage de permettre une adaptation du nombre d'éléments rayonnants actifs en fonction de la vitesse du porteur et plus généralement de l'encombrement du spectre Doppler de sorte à éviter un repliement de spectre.

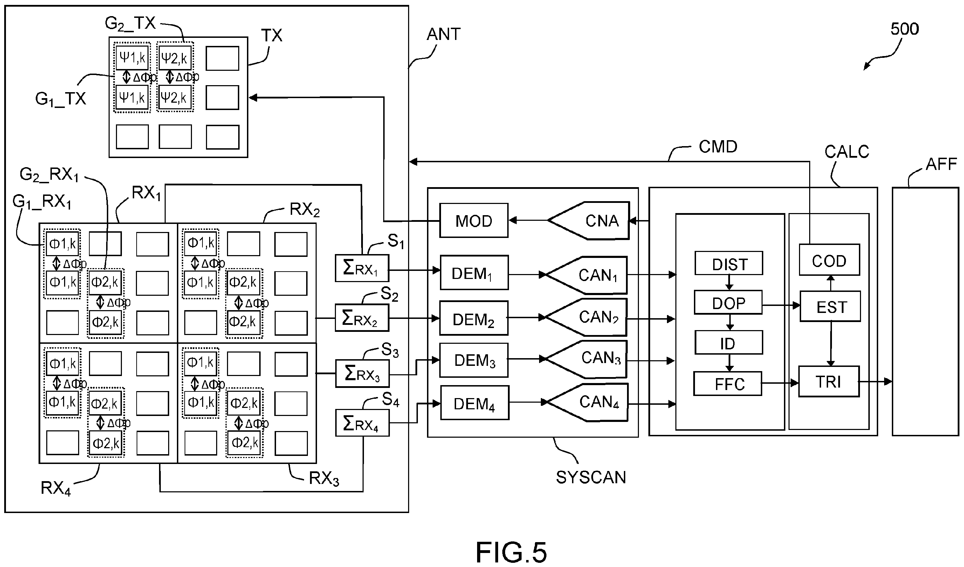

La figure 5 schématise une variante de réalisation du système radar 100 de la figure 1.

Dans cette variante, les éléments rayonnants élémentaires sont regroupés par groupes d'éléments ayant le même nombre d'éléments et la même répartition spatiale pour chaque secteur.

Dans l'exemple de la figure 5, les éléments rayonnants actifs de chaque secteur sont regroupés par deux éléments selon l'axe vertical.

Dans cette variante, l'invention s'applique à l'identique en remplaçant les éléments rayonnants actifs élémentaires de la figure 1 par les groupes d'éléments actifs de la figure 5.

Sur l'exemple de la figure 5, on a deux groupes G1_TX,G2_TX dans le secteur d'émission, chaque groupe étant constitué de deux éléments rayonnants.

De même, dans chaque secteur de réception on a deux groupes G1_RX1,G2_RX1 chacun constitué de deux éléments rayonnants.

Cela permet d'améliorer le bilan de portée dans un secteur angulaire réduit, ce qui est intéressant pour des vitesses de déplacement élevées.

Par ailleurs, les éléments rayonnants élémentaires appartenant à un même groupe sont affectés d'un déphasage différentiel associé à une loi de dépointage électronique.

Les éléments d'un même groupe sont affectés de déphasages choisis pour effectuer un pointage électronique dans une direction donnée. Cela permet de combiner le balayage électronique avec la technique de codage de phase des antennes élémentaires d'émission et de réception afin d'obtenir une solution hybride adaptative. La figure 5 représente une configuration avec des groupements de deux antennes élémentaires soumises aux mêmes lois de codage de phase, avec un déphasage différentiel $\Delta\phi$p supplémentaire constant entre les deux éléments antennaires de chaque groupe (en émission comme en réception).

Pour obtenir un pointage électronique dans une direction angulaire θ selon l'axe des éléments d'un groupe, le déphasage différentiel à appliquer entre ces éléments vaut :

$$\Delta\varphi_{\mathrm{p}} = \frac{2\pi}{\lambda}.a.\sin\theta$$

Avec a la distance entre les éléments rayonnants d'un groupe, de centre à centre.

Dans le cas d'un nombre plus important d'éléments dans un groupe, cette formule se généralise en un gradient de phase appliqué aux différents éléments rayonnants du groupe, selon la direction de pointage souhaitée.

Lorsque le porteur est à vitesse faible, l'encombrement Doppler lié à sa vitesse est réduit et il est possible d'exploiter un plus grand nombre de voies virtuelles afin d'obtenir une meilleure résolution angulaire. L'utilisation d'antennes élémentaires supplémentaires en émission et/ou en réception n'augmente pas le débit des données transmises au calculateur, puisqu'elles restent sur un nombre de secteurs de réception numérisés constant. Cela présente un avantage important par rapport à une solution où chaque antenne élémentaire supplémentaire de réception serait numérisée indépendamment, en générant pour chacune une voie numérique supplémentaire.

L'augmentation du nombre de voies virtuelles encodées va cependant augmenter le volume de calculs effectués pour la formation de faisceaux par le calcul. Si les capacités de calcul sont contraintes, il est possible de limiter le domaine distance traité afin de réduire le volume des données à traiter. Cette limitation de la portée est compatible avec une utilisation à faible vitesse.

L'invention nécessite au moins une antenne active avec la possibilité de modifier dynamiquement la configuration des éléments rayonnants qui sont activés et de leur affecter des codes de phase. Ce type d'antenne peut être employé pour des radars de surveillance, sur des hélicoptères notamment. Avantageusement, le radar de proximité proposé dans cette invention peut le cas échéant utiliser les capacités matérielles d'un tel radar pour réaliser ces fonctions. Le procédé proposé serait dans ce cas un mode de fonctionnement particulier du radar de surveillance, ce qui présenterait des avantages conséquents puisque ces fonctionnalités partageraient un unique matériel, ce qui est très favorable concernant la masse, la consommation, l'encombrement et le coût de l'équipement.

Le calculateur CALC du radar selon l'invention peut être réalisé, par exemple, sur un processeur embarqué. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Le dispositif de calcul peut utiliser un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

Références

[1] Mathieu Cattenoz. MIMO Radar Processing Methods for Anticipating and Preventing Real World Imperfections. Signal and Image Processing. Université Paris Sud - Paris XI, 2015.

[2] Goy Philippe. Détection d'obstacles et de cibles de collision par un radar FMCW aéroporté. PhD, Institut National Polytechnique de Toulouse, 2012

## Revendications

1. Système radar d'imagerie (100,500) comprenant un système antennaire (ANT) comportant une pluralité de secteurs (TX,RX1,RX2,RX3,RX4) composés chacun d'une pluralité d'éléments rayonnants activables, le système radar comprenant au moins une voie d'émission et au moins une voie de réception apte à commander chacun un secteur, chaque voie d'émission étant configurée pour commander un secteur (TX) au moyen d'une rafale de signaux ayant une fréquence de récurrence prédéterminée et **caractérisé en ce que** la phase à l'origine à chaque récurrence suit une loi de codage en phase prédéfinie, chaque voie de réception étant configurée pour appliquer ladite loi de codage en phase aux éléments rayonnants actifs (ET1_RX1,ET2_RX1) d'un secteur (RX1), les lois de codage en phase appliquées aux différents éléments rayonnants actifs (ET1_TX,ET2_TX,ET1_RX1,ET2_RX1) d'un ensemble composé d'un secteur commandé par une voie d'émission et d'un secteur commandé par une voie de réception, étant orthogonales entre elles, le système comprenant en outre un calculateur (CALC) comprenant un module d'identification (ID) de voies virtuelles configuré pour filtrer en réception chaque voie virtuelle correspondant à la combinaison d'un élément rayonnant (ET1_TX,ET2_TX) d'un secteur commandé par une voie d'émission et d'un élément rayonnant (ET1_RX1,ET2_RX1) d'un secteur commandé par une voie de réception.

2. Système radar d'imagerie selon la revendication 1 dans lequel chaque loi de codage en phase est définie par une fréquence Doppler différente pour chaque élément rayonnant (ET1_TX,ET2_TX,ET1_RX1,ET2_RX1), chaque voie virtuelle étant définie par une fréquence Doppler égale à la somme de la fréquence Doppler associée à un élément rayonnant en émission et de la fréquence Doppler associée à un élément rayonnant en réception, les valeurs des fréquences Doppler des éléments rayonnants étant choisies de manière à ce que l'ensemble des fréquences Doppler des voies virtuelles soient équiréparties dans une bande de fréquence [-Fr/2 ; Fr/2] avec Fr la fréquence de récurrence.

3. Système radar d'imagerie selon la revendication 2 dans lequel le système radar est destiné à être embarqué sur un porteur mobile ayant une vitesse de déplacement donnée et le calculateur (CALC) comprend en outre un module d'activation (COD) des éléments rayonnants et un module d'estimation d'encombrement spectral (EST) configurés pour déterminer un nombre d'éléments rayonnants actifs par secteur maximal respectant une contrainte d'encombrement spectral des voies virtuelles fonction de la vitesse de déplacement du porteur et de la fréquence de récurrence des signaux de sorte à éviter un repliement de spectre.

4. Système radar d'imagerie selon la revendication 3 dans lequel le nombre d'éléments rayonnants actifs M par secteur (TX) commandé par une voie d'émission et le nombre d'éléments rayonnants actifs N par secteur (RX1) commandé par une voie de réception respectent la contrainte suivante : $M.N < (\lambda Fr/2Vp)$ où $\lambda$ est la longueur d'onde des signaux, Fr est la fréquence de récurrence et Vp est la vitesse de déplacement du porteur.

5. Système radar d'imagerie selon l'une quelconque des revendications précédentes dans lequel la loi de codage en phase des éléments rayonnants suit une modulation de type « Doppler Division Multiple Access » DDMA.

6. Système radar d'imagerie selon l'une quelconque des revendications précédentes dans lequel chaque voie de réception comprend un sommateur (S1,S2,S3,S4) pour sommer les signaux reçus par les éléments rayonnants actifs d'un même secteur.

7. Système radar d'imagerie selon l'une quelconque des revendications précédentes dans lequel chaque voie d'émission comporte un modulateur (MOD) configuré pour moduler les signaux radar en fréquence sur chaque récurrence.

8. Système radar d'imagerie selon l'une quelconque des revendications 1 à 6 dans lequel chaque voie d'émission comporte un générateur d'impulsions radar configuré pour générer une rafale d'impulsions radar à la fréquence de récurrence prédéterminée.

9. Système radar d'imagerie selon l'une quelconque des revendications précédentes dans lequel chaque élément rayonnant actif (G1_TX,G2_TX) est composé d'une pluralité de sous-éléments rayonnants actifs, chaque voie d'émission et chaque voie de réception étant configurée pour appliquer une commande de dépointage prédéfinie aux sous-éléments rayonnants actifs d'un même élément rayonnant actif.

10. Système radar d'imagerie selon l'une quelconque des revendications précédentes dans lequel le calculateur (CALC) est configuré pour réaliser, pour chaque voie de réception, un traitement de filtrage distance (DIST) sur les signaux à chaque récurrence et un traitement de filtrage Doppler (DOP) de récurrence à récurrence.

**Patentansprüche**

1. Bildgebendes Radarsystem (100, 500), umfassend ein Antennensystem (ANT) mit einer Vielzahl von Sektoren (TX, RX1, RX2, RX3, RX4), die jeweils aus einer Vielzahl von aktivierbaren Strahlungselementen bestehen, wobei das Radarsystem mindestens einen Sendekanal und mindestens einen Empfangskanal umfasst, die jeweils geeignet sind, einen Sektor zu steuern, wobei jeder Sendekanal so konfiguriert ist, dass er einen Sektor (TX) mittels eines Signalbursts mit einer vorbestimmten Wiederholungsfrequenz steuert, und **dadurch gekennzeichnet, dass** die Phase am Ursprung bei jeder Wiederholung einem vordefinierten Phasenkodierungsgesetz folgt, wobei jeder Empfangskanal so konfiguriert ist, dass er das Phasenkodierungsgesetz auf die aktiven Strahlungselemente (ET1_RX1, ET2_RX1) eines Sektors (RX1) anwendet, wobei die auf die verschiedenen aktiven Strahlungselemente (ET1_TX, ET2_TX, ET1_RX1, ET2_RX1) einer Gruppe, die aus einem durch einen Sendekanal gesteuerten Sektor und einem durch einen Empfangskanal gesteuerten Sektor besteht, angewendeten Phasenkodierungsgesetze zueinander orthogonal sind, das System ferner einen Rechner (CALC) umfasst, der ein Modul zur Identifizierung (ID) virtueller Kanäle umfasst, das so konfiguriert ist, dass es beim Empfang jeden virtuellen Kanal filtert, welcher der Kombination aus einem Strahlungselement (ET1_TX, ET2_TX) eines durch einen Sendekanal gesteuerten Sektors und einem Strahlungselement (ET1_RX1, ET2_RX1) eines durch einen Empfangskanal gesteuerten Sektors entspricht.

2. Bildgebendes Radarsystem nach Anspruch 1, wobei jedes Phasencodierungsgesetz durch eine unterschiedliche Dopplerfrequenz für jedes Strahlungselement (ET1_TX, ET2_TX, ET1_RX1, ET2_RX1) definiert ist, wobei jeder virtuelle Kanal durch eine Dopplerfrequenz definiert ist, die gleich der Summe der einem Strahlungselement beim Senden zugeordneten Dopplerfrequenz und der einem Strahlungselement beim Empfang zugeordneten Dopplerfrequenz ist, wobei die Werte der Dopplerfrequenzen der Strahlungselemente so gewählt sind, dass die Gesamtheit der Dopplerfrequenzen der virtuellen Kanäle gleichmäßig in einem Frequenzband [-Fr/2; Fr/2] verteilt ist, wobei Fr die Wiederholungsfrequenz ist.

3. Bildgebendes Radarsystem nach Anspruch 2, wobei das Radarsystem dazu bestimmt ist, auf einem mobilen Träger mit einer gegebenen Bewegungsgeschwindigkeit mitgeführt zu werden, und der Rechner (CALC) ferner ein Modul zur Aktivierung (COD) der Strahlungselemente und ein Modul zur Schätzung der spektralen Überlastung (EST) umfasst, die so konfiguriert sind, dass sie eine maximale Anzahl von aktiven Strahlungselementen pro Sektor bestimmen, die eine Beschränkung der spektralen Überlastung der virtuellen Kanäle einhalten, die von der Bewegungsgeschwindigkeit des Trägers und der Wiederholungsfrequenz der Signale abhängt, so dass eine Faltung des Spektrums vermieden wird.

4. Bildgebendes Radarsystem nach Anspruch 3, wobei die Anzahl der aktiven Strahlungselemente M pro Sektor (TX), die von einem Sendekanal gesteuert werden, und die Anzahl der aktiven Strahlungselemente N pro Sektor (RX1), die von einem Empfangskanal gesteuert werden, die folgende Beschränkung erfüllen: $M.N < (\lambda Fr/2Vp)$ wobei $\lambda$ die Wellenlänge der Signale, Fr die Wiederholungsfrequenz und Vp die Bewegungsgeschwindigkeit des Trägers ist.

5. Bildgebendes Radarsystem nach einem der vorhergehenden Ansprüche, wobei das Gesetz der Phasenkodierung der Strahlungselemente einer Modulation vom Typ "Doppler Division Multiple Access", DDMA, folgt.

6. Bildgebendes Radarsystem nach einem der vorhergehenden Ansprüche, wobei jeder Empfangskanal einen Summierer (S1, S2, S3, S4) umfasst, um die von den aktiven Strahlungselementen desselben Sektors empfangenen Signale zu summieren.

7. Bildgebendes Radarsystem nach einem der vorhergehenden Ansprüche, wobei jeder Sendekanal einen Modulator (MOD) umfasst, der so konfiguriert ist, dass er die Radarsignale über jede Wiederholung frequenzmoduliert.

8. Bildgebendes Radarsystem nach einem der Ansprüche 1 bis 6, wobei jeder Sendekanal einen Radarimpulsgenerator umfasst, der so konfiguriert ist, dass er einen Burst von Radarimpulsen mit der vorbestimmten Wiederholungsfrequenz erzeugt.

9. Bildgebendes Radarsystem nach einem der vorhergehenden Ansprüche, wobei jedes aktive Strahlungselement (G1_TX, G2_TX) aus einer Vielzahl von aktiven Strahlungsunterelementen besteht, wobei jeder Sendekanal und jeder Empfangskanal so konfiguriert ist, dass er eine vordefinierte Strahl-Ablenkungssteuerung auf die aktiven Strahlungsunterelemente eines einzelnen aktiven Strahlungselements anwendet.

10. Bildgebendes Radarsystem nach einem der vorhergehenden Ansprüche, wobei der Rechner (CALC) so konfiguriert ist, dass er für jeden Empfangskanal eine Distanzfilterverarbeitung (DIST) an den Signalen bei jeder Wiederholung und eine Dopplerfilterverarbeitung (DOP) von Wiederholung zu Wiederholung durchführt.

**Claims**

1. An imaging radar system (100, 500) comprising an antenna system (ANT) having a plurality of sectors (TX, RX1, RX2, RX3, RX4) each composed of a plurality of activatable radiating elements, the radar system comprising at least one transmission channel and at least one reception channel capable of each controlling a sector, each transmission channel being configured to control a sector (TX) by means of a signal burst having a predetermined recurrence frequency and **characterised in that** the phase at the origin of each recurrence follows a predefined phase coding law, each reception channel being configured to apply said phase coding law to the active radiating elements (ET1_RX1, ET2_RX1) of a sector (RX1), the phase coding laws applied to the different active radiating elements (ET1_TX, ET2_TX, ET1_RX1, ET2_RX1) of a set composed of a sector controlled by a transmission channel and of a sector controlled by a reception channel, being mutually orthogonal, the system further comprising a computer (CALC) comprising a virtual channel identification module (ID) configured to filter in reception each virtual channel corresponding to the combination of a radiating element (ET1_TX, ET2_TX) of a sector controlled by a transmission channel and of a radiating element (ET1_RX1, ET2_RX1) of a sector controlled by a reception channel.

2. The imaging radar system according to claim 1, wherein each phase coding law is defined by a different Doppler frequency for each radiating element (ET1_TX, ET2_TX, ET1_RX1, ET2_RX1), each virtual channel being defined by a Doppler frequency equal to the sum of the Doppler frequency associated with a radiating element in transmission and of the Doppler frequency associated with a radiating element in reception, the values of the Doppler frequencies of the radiating elements being chosen such that all of the Doppler frequencies of the virtual channels are evenly distributed in a frequency band [-Fr/2; Fr/2], with Fr being the recurrence frequency.

3. The imaging radar system according to claim 2, wherein the radar system is intended to be embedded on a mobile carrier having a given speed of movement and the computer (CALC) further comprises an activation module (COD) for the radiating elements and a spectral congestion estimation module (EST) that are configured to determine a maximum number of active radiating elements per sector that observes a constraint of spectral congestion of the virtual channels as a function of the speed of movement of the carrier and of the recurrence frequency of the signals so as to avoid spectral folding.

4. The imaging radar system according to claim 3, wherein the number of active radiating elements M per sector (TX) controlled by a transmission channel and the number of active radiating elements N per sector (RX1) controlled by a reception channel observe the following constraint: $M.N < (\lambda Fr/2Vp)$, in which $\lambda$ is the wavelength of the signals, Fr is the recurrence frequency and Vp is the speed of movement of the carrier.

5. The imaging radar system according to any one of the preceding claims, wherein the phase coding law of the radiating elements follows a modulation of "Doppler Division Multiple Access", DDMA, type.

6. The imaging radar system according to any one of the preceding claims, wherein each reception channel comprises a summer (S 1, S2, S3, S4) for summing the signals received by the active radiating elements of one and the same sector.

7. The imaging radar system according to any one of the preceding claims, wherein each transmission channel has a modulator (MOD) configured to frequency-modulate the radar signals on each recurrence.

8. The imaging radar system according to any one of claims 1 to 6, wherein each transmission channel has a radar pulse generator configured to generate a burst of radar pulses at the predetermined recurrence frequency.

9. The imaging radar system according to any one of the preceding claims, wherein each active radiating element (G1_TX, G2_TX) is composed of a plurality of active radiating sub-elements, each transmission channel and each reception channel being configured to apply a predefined misalignment beam steering control to the active radiating sub-elements of one and the same active radiating element.

10. The imaging radar system according to any one of the preceding claims, wherein the computer (CALC) is configured to perform, for each reception channel, a distance filtering processing (DIST) on the signals on each recurrence and a Doppler filtering processing (DOP) from recurrence to recurrence

FIG.1

FIG.2

Niveau

Fd_ rx1+ Fd_ tx1   Fd_ rx1+ Fd_ tx2          Fd_ rx2+ Fd_ tx1   Fd_ rx2+ Fd_ tx2

-Fr/2                                                                    Fr/2      fd

FIG.3

Niveau

Fd_ rx1+ Fd_ tx1     Fd_ rx1+ Fd_ tx2        Fd_ rx2+ Fd_ tx1      Fd_ rx2+ Fd_ tx2

2.Vp/λ          2.Vp/λ            2.Vp/λ            2.Vp/λ

-Fr/2                                                                    Fr/2      fd

FIG.4

FIG.5

EP 4 050 376 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3671270 A1

**Littérature non-brevet citée dans la description**

- MIMO Radar Processing Methods for Anticipating and Preventing Real World Imperfections. **MATHIEU CATTENOZ.** Signal and Image Processing. Université Paris Sud - Paris XI, 2015

- Détection d'obstacles et de cibles de collision par un radar FMCW aéroporté. **GOY PHILIPPE.** PhD. Institut National Polytechnique de Toulouse, 2012